Europäisches Patentamt

European Patent Office

Office européen des brevets

(11) Publication number: **0 609 466 A1**

# EUROPEAN PATENT APPLICATION
## published in accordance with Art. 158(3) EPC

(21) Application number: 94908807.4

(22) Date of filing: 20.08.93

(86) International application number:
PCT/JP93/01166

(87) International publication number:
WO 94/06184 (17.03.94 94/07)

(51) Int. Cl.5: **H01T 23/00**, F23G 5/00, H05B 31/50, F23J 1/00, B09B 3/00, C01B 13/11

(30) Priority: 27.08.92 JP 228984/92
16.04.93 JP 90286/93
27.04.93 JP 101526/93
28.04.93 JP 102970/93

(43) Date of publication of application:
10.08.94 Bulletin 94/32

(84) Designated Contracting States:
BE CH DE FR GB IT LI NL SE

(71) Applicant: TSUJINO, Hiroshi
3-15-7, Higashishirakawadai,
Suma-ku
Kobe-shi, Hyogo-ken 654-01 (JP)

(72) Inventor: TSUJINO, Hiroshi
3-15-7, Higashishirakawadai,
Suma-ku
Kobe-shi, Hyogo-ken 654-01 (JP)

(74) Representative: Carpenter, David et al
MARKS & CLERK,
Alpha Tower,
Suffolk Street Oueensway
Birmingham B1 1TT (GB)

(54) POLYPHASE ALTERNATING CURRENT MULTI-ELECTRODE DISCHARGER, POWDERY WASTE DISPOSAL APPARATUS USING THIS DISCHARGER, OZONE GENERATOR, AND LIGHT SOURCE APPARATUS.

(57) A polyphase alternating current is applied in the order of its phases to the discharge electrodes arranged on the vertices of a regular polygon. In the space surrounded by the electrodes, discharge such as corona discharge, glow discharge, or arc discharge is caused while always rotated at a high speed, and high energy of intense heat or light is produced highly efficiently by the discharge. The high energy produced by the discharge can be utilized extremely easily because the discharge takes a planar form. By utilizing the planar arc discharge generated by the polyphase alternating current multi-electrode discharger, powdery waste can be melted efficiently, and ozone can be generated highly efficiently. Furthermore, by the use of the planar discharge, it is possible to provide a light source apparatus whose entire discharging chamber can emit light uniformly.

F I G . 1

SPECIFICATION

TECHNICAL FIELD

The present invention relates to a polyphase AC multielectrode discharge apparatus for generating a virtual plane electric discharge which rotates at a high speed among a plurality of electrodes by applying a polyphase AC to the electrodes in regular sequence. The present invention also relates to a waste processing apparatus in which extremely high-temperature obtained by the virtual plane arc discharge generated with the polyphase AC multielectrode discharge apparatus is utilized as a heat source for melt processing of powder waste, an ozone generator capable of generating an ozone very efficiently by utilizing the virtual plane corona discharge generated with the polyphase AC multielectrode discharge apparatus, and a light source apparatus in which the whole plane illuminates uniformly by utilizing the virtual plane discharge generated with the polyphase AC multielectrode discharge apparatus.

BACKGROUND ART

It is well known that there are various types of electric discharge phenomena in gas such as corona discharge, glow discharge, and arc discharge according to magnitude of atmospheric pressure or current, and each discharge phenomenon is widely used in various instruments as a supply source of high temperature, highly intense light, or unipolar charged body. In each field using these discharge phenomena, many kinds of research and development has been done in order to utilize a highly intense energy emitted by the electric discharge efficiently.

For example, in the technical field using the arc discharge, they surround the discharge electrode with a water-cooler nozzle, or jet an operating gas such as argon to the discharge electrode in order to constrain and stabilize the arc plasma, and to improve the characteristic of plasma stream in terms of high temperature, speed, and convergence. Also, in the field using the corona discharge for ozone generation, in order to prompt a constant movement of corona discharge on the surface of the electrode, they parallel position, with high precision, flat-plate electrodes with evenly polished surface, or additionally rotate the electrodes while keeping this parallelism. Thus, the movement of corona discharge is prompted in order to cause electrons generated by the corona discharge to collide with oxygen molecules more efficiently.

Further, in order to utilize the high energy accompanied by the discharge efficiently, various improvements has been made in each technical field and each has its effectiveness. However, as mentioned above, most of the conventional arts for improvements relates to the discharge electrode or its peripherals, and little improvement was made for the intense energy generating discharge phenomenon itself. In short, the basic structure of all the conventional discharge apparatus was a pair of electrodes having a power source of single-phase AC or DC, and all generated discharge phenomenon themselves were still linear discharge. As long as the discharge phenomenon itself was a difficult-to-utilize linear discharge, an improvement in energy efficiency had a limit even if the discharge electrode was effectively improved.

Accordingly, it is an object of the present invention to provide a polyphase AC multielectrode discharge apparatus capable of generating a virtual plane discharge which rotates at a high speed continuously among a plurality of electrodes by sequentially applying a polyphase AC between a plurality of electrodes forming a regular polygon.

It is another object of the present invention to provide;

A waste processing apparatus in which very high-temperature obtained by the virtual plane arc discharge generated by the polyphase AC multielectrode discharge apparatus is effectively utilized as a heat source for melt processing of powder waste such as incinerated ashes,

An ozone generator which is capable of generating ozone very efficiently by utilizing the virtual plane corona discharge generated by the polyphase AC multielectrode discharge apparatus,

And a light source apparatus in which the whole discharge chamber lights uniformly by utilizing the virtual plane discharge generated by the polyphase AC multielectrode discharge apparatus.

DISCLOSURE OF THE INVENTION

A polyphase AC multielectrode discharge apparatus according to the present invention comprises an n-phase AC generator for outputting an n-phase AC, and discharge electrodes $T_1 \sim T_n$ whose tips are placed in the proximity of each vertex of regular n-gon, characterized in that each output terminals of the n-phase AC generator are connected to the discharge electrodes $T_1 \sim T_n$ clockwise or counterclockwise in the order of phase sequence. Thus, a virtual plane discharge continuously rotating at a high speed among the discharge electrodes $T_1 \sim T_n$ can be generated without interruption.

Also, according to the present invention, in addition to the above polyphase AC multielectrode discharge apparatus, a waste hopper for containing a powder waste such as incinerated ashes, an extruder for feeding the powder waste among the

discharge electrodes $T_1 \sim T_n$ from the waste hopper, and an ejector for ejecting the melt-processed substance was provided. By this, a very high-temperature obtained by the virtual plane arc discharge among the discharge electrodes $T_1 \sim T_n$ can be effectively utilized as a heat source of melt-processing and the powder waste can be melt-processed efficiently.

Further, to the above polyphase AC multielectrode discharge apparatus, the present invention provided an ozone generating chamber which surrounds the discharge electrodes $T_1 \sim T_n$ and through which oxygen or a gas containing oxygen flows. By this, oxygen or the gas containing oxygen can be efficiently flown through the area of virtual plane corona discharge generated among the discharge electrodes $T_1 \sim T_n$ and thus ozone can be generated very efficiently.

Still more, to the above polyphase AC multielectrode discharge apparatus, a discharge chamber which envelopes the discharge electrodes $T_1 \sim T_n$ and in which gas or vapor is sealed in is provided. By this, it became possible to make a light source apparatus whose whole discharge chamber lights uniformly.

## BRIEF DESCRIPTION OF THE DRAWINGS

Fig. 1 is a schematic diagram illustrating a construction and connection of a six-phase AC six-electrode discharge apparatus according to the embodiment of the present invention;
Fig. 2 is a vector diagram of AC voltage applied between each of the electrodes in the six-phase AC six-electrode discharge apparatus;
Fig. 3 is a composite vector diagram of AC voltage applied between each of the electrodes in the six-phase AC six-electrode discharge apparatus;
Fig. 4 is a discharge pass diagram of a virtual plane discharge generated by the six-phase AC six-electrode discharge apparatus;
Fig. 5 is a schematic diagram illustrating the distance between each of the electrodes in an n-phase AC n-electrode discharge apparatus of the present invention;
Fig. 6 is a schematic diagram illustrating a construction of a powder waste processing apparatus using the six-phase AC six-electrode discharge apparatus;
Figs. 7 and 8 are schematic diagrams illustrating a construction of an ozone generator using the six-phase AC six-electrode discharge apparatus;Fig. 9 is a schematic diagram illustrating a construction of a light source apparatus using the six-phase AC six-electrode discharge apparatus;

Fig. 10 is a sectional side view of a discharge chamber of the light source apparatus; and
Fig. 11 is a schematic diagram illustrating a construction of the light source apparatus showing a modification according to the present embodiment.

## BEST MODE FOR CARRYING OUT THE INVENTION

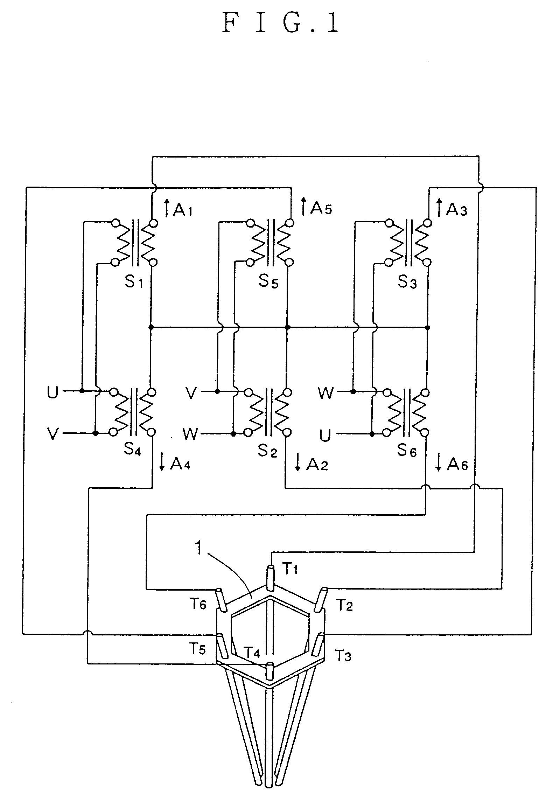

Referring first to the Figures 1~4, the polyphase AC multi-electrode discharge apparatus of the present invention will be explained by the example of six-phase AC six-electrode discharge apparatus. The six-phase AC six-electrode discharge apparatus of the present example comprises six-phase AC generator and six discharge electrodes $T_1 \sim T_6$. In the drawings, numeral 1 designates insulating electrode holder supporting 6 rods of discharge electrodes $T_1 \sim T_6$, and this electrode holder 1 holds the 6 discharge electrodes $T_1 \sim T_6$ such that the tips of the electrodes are placed in the proximity of the each vertex of a regular hexagon.

In the Figure 1, letters U-V, V-W, and W-U designates three phase output terminals delta-connected (star connection being a good alternative) to three phase AC power supply. Terminals U-V is connected to transformer $S_1$, $S_4$, terminals V-W is connected to transformer $S_5$, $S_2$, and terminals W-U is connected to transformer $S_3$ , $S_6$ , thus, each phase is connected to two single phase transformers in parallel, three pairs of which totals six single-phase transformers. Leakage transformers are used for these transformers $S_1 \sim S_6$. Between a pair of transformers connected to one of the three phases, the end of the secondary winding of the one transformer and the beginning of the secondary winding of the other transformer is connected, and this connecting line is connected to the other two connecting lines each similarly connecting between matching pair of transformers. Thus, the six terminals of the secondary winding of the transformers that are on the side not mutually connected are used as the output terminals of the six-phase AC.

If the single phase AC outputted from the single phase transformer $S_1 \sim S_6$ is designated $A_1 \sim A_6$, the AC $A_1$ and $A_4$ outputted from parallel-connected $S_1$ and $S_4$ becomes mutually negative-phased, and similarly the AC $A_6$ and $A_2$, $A_3$ and $A_6$ will become mutually negative-phased. At the same time, the AC $A_1$, $A_6$, and $A_3$ outputted from transformer $S_1$, $S_5$, $S_3$ will have 120° phase differences mutually, the same being applicable to the AC $A_4$, $A_2$, $A_6$. Due to these phase relations existing between AC $A_1 \sim A_6$, the six-phase AC generator outputs six single-phase AC each having 60° phase differences.

The six-phase AC generator adopted by the present embodiment is able to transform three phase AC to six-phase AC simply by using one kind of transformer without complex structure, thus capable of providing the discharge apparatus very economically.

This six-phase AC generator and the discharge electrode $T_1 \sim T_6$ is connected in the following way. That is, the six single-phase AC $A_1 \sim A_6$, outputted from the six-phase AC generator are connected to the discharge electrode $T_1 \sim T_6$ clockwise or counter-clockwise in the order of phase sequence. AC $A_1$ is conducted to the discharge electrode $T_1$, AC $A_2$ is conducted to the next electrode $T_2$, in this way each AC is conducted to the corresponding electrode, AC $A_3$ to $T_3$, AC $A_4$ to $T_4$, AC $A_5$ to $T_5$, AC $A_6$ to $T_6$.

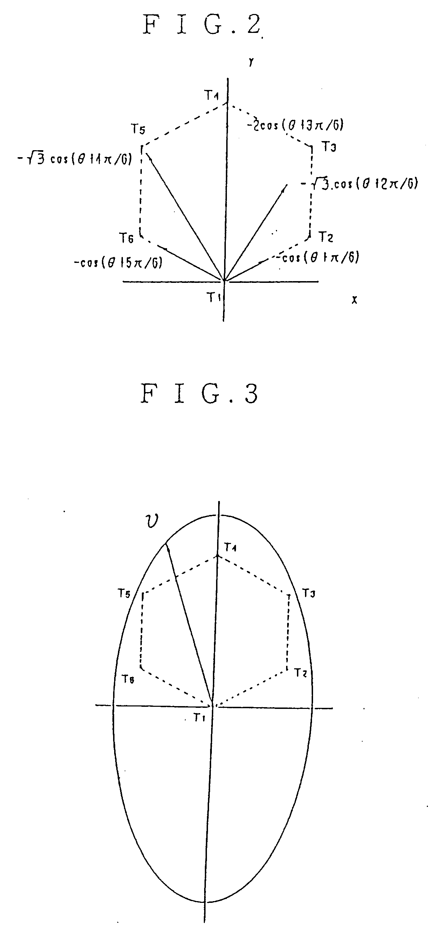

With this connection, as the discharge begin, multiple discharge is generated continually between each electrodes and these discharge shifts rapidly so as to rotate very fast, so that in the area surrounded by the discharge electrode $T_1 \sim T_6$ a virtual plane discharge is obtained. The manner in which this virtual plane discharge generated among the discharge electrode $T_1 \sim T_6$ will be explained in reference to the FIG. 2 and FIG. 3, below.

The voltage applied to the discharge electrodes $T_1 \sim T_6$ respectively are expressed by the following:
Given Electrode $T_1$ ; $\sin \theta$ , then,

Electrode $T_2$ ; $\sin(\theta + 2\pi/6)$,
Electrode $T_3$ ; $\sin(\theta + 4\pi/6)$,
Electrode $T_4$ ; $\sin(\theta + 6\pi/6)$,
Electrode $T_5$ ; $\sin(\theta + 8\pi/6)$,
Electrode $T_6$ ; $\sin(\theta + 10\pi/6)$,

Accordingly, the voltage between the electrodes $T_1 - T_2$ is;

$$\sin\theta - \sin(\theta + 2\pi/6) = -\cos(\theta + \pi/6)$$

Similarly, the voltage between

the electrodes $T_1 - T_3$ is; $-\sqrt{3}\cos(\theta + 2\pi/6)$,
the electrodes $T_1 - T_4$ is; $-2\cos(\theta + 3\pi/6)$,
the electrodes $T_1 - T_5$ is; $-\sqrt{3}\cos(\theta + 4\pi/6)$,
the electrodes $T_1 - T_6$ is; $-\cos(\theta + 5\pi/6)$.

The point here is the maximum voltage applied between the each electrodes corresponds to the distance between the electrodes. That is, the discharge electrodes $T_1 \sim T_6$ is placed at the vertexes of the regular hexagon, and thus, given the distance of L between $T_1 - T_2$,

$T_1 - T_3$ distance ; $\sqrt{3}L$
$T_1 - T_4$ distance ; $2L$
$T_1 - T_5$ distance ; $\sqrt{3L}$
$T_1 - T_6$ distance ; $L$

As the proportionate relationship of these electrodes distances and corresponding voltage shows, with the apparatus of the present invention, the applied peak voltage par unit distance are the same between any pair of electrodes. Thus, the electric discharge occurs not only between the neighboring electrodes, but also with the other electrodes.

Next, the temporal rotation of discharge from $T_1$ to $T_2 \sim T_6$ will be explained. The FIG. 2 is a vector chart of the applied voltage between $T_1$ and other electrodes $T_2 \sim T_6$ at a certain moment. The discharge from electrode $T_1$ to the other electrodes $T_2 \sim T_6$ changes moment by moment, and this discharge change is done integrally. That is, as shown in the FIG. 3, each discharge continuously changes so that the combined vector $v$ , which is obtained by the summing of all discharge vectors from $T_1$ to $T_2 \sim T_6$, turns on a elliptic locus.

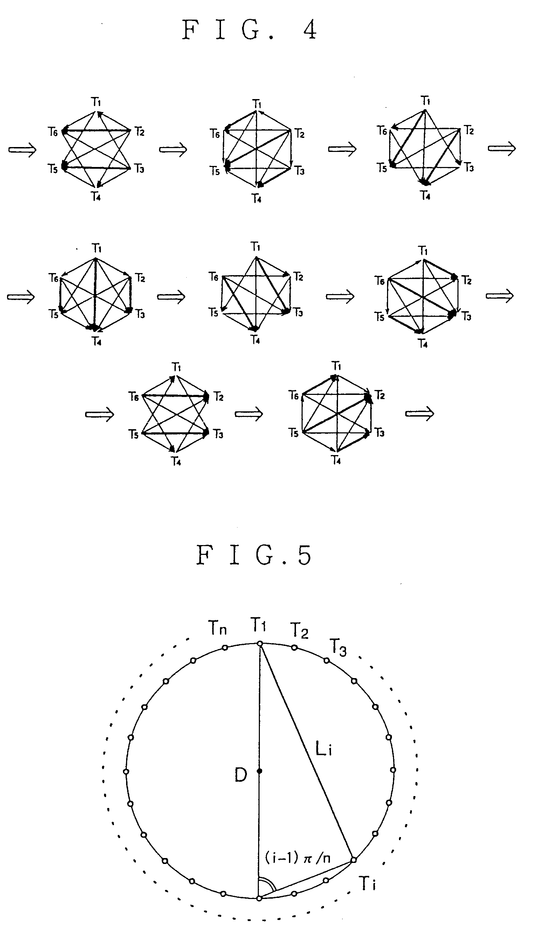

Now, as shown in FIG. 3, at the moment when the combined vector $v$ points right in the middle of the electrode $T_4$ and $T_5$, the electric discharge splits and bends to reach $T_4$ and $T_5$ mostly. This means that the discharge of the apparatus of the present invention not only takes the straight path between the electrode $T_1$ and other electrodes $T_2 \sim T_6$, but it also moves over the other spaces. Other electrodes similarly have the combined vector $v$ . These turning multiple combined vectors generates even and stable virtual plane discharge as a whole. The rotating manner of this virtual plane discharge is shown in FIG. 4.

The FIG. 4 reveals momentary discharge paths as the phase rotates 30 ° each time. The thick arrows in the figure means that at the moment, the peak voltage is applied between the relative electrodes and the discharge current flows toward the direction of the arrows. Thin arrows shows that non-peak electric voltage is applied between the relative electrodes, and discharge current flows toward the direction of the arrows. In the FIG. 4, in order to simplify the manner of discharge, the discharge path is expressed by the straight lines, and the entire paths seems reticulate, but because the actual discharge sweeping the whole plane splits and bends, making the actual discharge a virtual plane among the discharge electrodes $T_1 \sim T_6$.

As clearly shown in FIG. 4, with the discharge apparatus of the present embodiment, at every moment, multiple discharge is generated simultaneously, and these multiple discharges are all facing the same side while they rotates. Since they rotates once per every single AC cycle, with the 50Hz or 60Hz power source, the multiple discharge facing the same side performs high speed rotation of 50 or 60 times per second.

Next, the results of the measuring experiments on six-phase AC six-electrode discharge apparatus of the present embodiment conducted at the Fukui Prefecture Industrial Technology Center, Japan, and Fukui Prefecture Hygenic Research Center Radiation Department is shown.

With the condition of 1 ~ 5 mm distance between adjacent electrodes distance, 65 V discharge voltage, 200A discharge current, arc discharge was generated, and the plasma temperature reached close to 10, 000 $°C$, ultra-violet radiation of effective brightness 30,000 $\mu$ W/cm$^2$ was measured. This plasma jet was irradiated for 30 seconds to the ash remain of waste burned at the 1,300 $°C$, and the ash remain became a vitrified material of about 1/5 the original volume. The same plasma jet was irradiated to a firebrick with the melting temperature of 1350 $°C$ for 30 seconds, and a cavity with a diameter of 7~8 cm, and a depth of 3~5 mm was formed due to melting. This cavity portion was so hard that a super-hard drill cannot make a scratch on its surface.

Also, with the discharge voltage of 40V, discharge current of 200A, as soon as the arc discharge was started, besides the high temperature, the ultraviolet radiation of wavelength around $10^{-7}$ m was measured, and with the discharge voltage of 65V, discharge current of 200A, the ultra violet radiation of wavelength around $10^{-8}$ m was measured, and with the discharge voltage of 200V, discharge current of 200A, the electro magnetic wave of wavelength around $10^{-9}$ m was measured (measurable only for a few seconds).

So far, the features of six-phase AC six-electrode discharge apparatus was explained as an embodiment, but these features are of course applicable to polyphase AC multielectrode discharge apparatus in general. This is explained in reference to the FIG.5.

FIG. 5 describes the N-phase AC n-electrode discharge apparatus comprising, N phase AC generator outputting n-phase AC and discharge electrodes $T_1 \sim T_n$ placed at each vertex of the regular n-gon inscribed to a circle with a diameter of D. Each terminals of the said n-phase AC generator is connected according to the order of phase sequence to the electrodes $T_1 \sim T_n$ in the clockwise order.

In this n-electrode AC discharge apparatus, the distance $L_i$ between the electrode $T_1$ and the i-th electrode $T_i$ is:

$$L_i = D \sin (( i - 1)\pi /n) \quad (1)$$

and if AC with voltage to ground of $\sin \theta$ is applied to the discharge electrode $T_1$, the voltage to

ground of $\sin ( \theta + 2 (i - 1)\pi /n)$ will be applied to $T_i$ Therefore, the voltage between $T_1 \sim T_i$ s;

$$\sin \theta - \sin ( \theta + 2 ( i - 1)\pi /n) = -2 \sin ((i - 1)\pi /n) \cos ( \theta + (i - 1)\pi /n) \quad (2)$$

Since $- 2 \sin (( i - 1)\pi /n)$ in the formula (2) and $L_i = D \sin (( i - 1)\pi /n)$ (1) is in the proportionate relationship it is clear that also in the case of the N-phase AC n-electrode discharge apparatus, the peak voltage applied per unit distance becomes equal between any electrodes. In this way, the discharge occurs not only between the adjacent electrodes but also between other electrodes and virtual plane discharge occurs.

Thus, with the polyphase AC multi-electrode discharge apparatus of the present invention, each of the various electric discharges such as corona discharge, glow discharge, or arc discharge is continuously generated in the area surrounded by the plurality of electrodes as the discharge rotates rapidly. Thus, a high energy such as intense heat, extremely bright light can be generated very efficiently, and because these discharge is done in a form of a plane, the utilization of the high energy accompanied by the discharge becomes very easy.

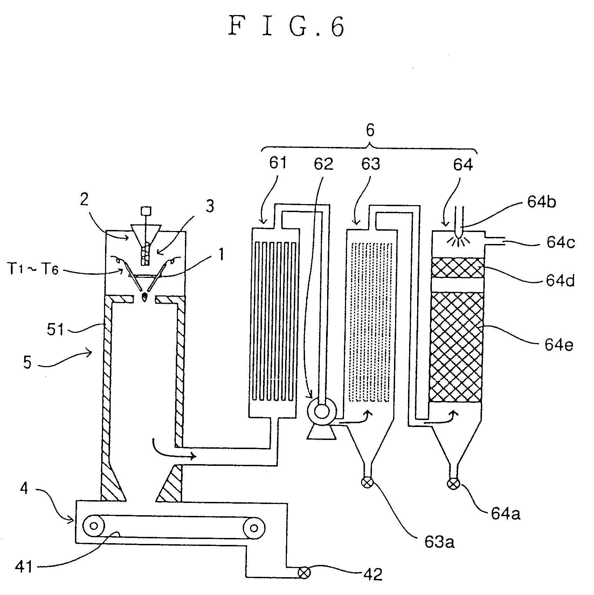

A powder waste processing apparatus, an ozone generator, and a light source apparatus using the polyphase AC multielectrode discharge apparatus will be described respectively below. Referring first to Fig.6, there is shown the powder waste processing apparatus using the six-phase AC six-electrode discharge apparatus.

Recently, various attempts have been made to reduce the waste and utilize it as resources such as aggregates by melt-processing and vitrifying the ashes generated by the incineration of general or industrial waste. However, it has not yet been put to practical use, because problem existed in securing the source of high temperature for melt-processing. The waste processing apparatus according to the present invention utilizes a very high temperature obtained by a virtual plane arc discharge generated by the above polyphase AC multielectrode discharge apparatus as the heat source for the melt-processing of powder waste.

Since the arc discharge accompanied by high temperature is generated in the form of a plane by using the polyphase AC multielectrode discharge apparatus, the high-temperature state in the center of the discharge plane is maintained with little heat loss. Further, since the virtual plane discharge rotates at a high speed and thereby converge a plasma jet, very high-temperature can be easily obtained, which was difficult to obtain with the prior arts apparatus due to excessive heat loss.

Mark 5 in Fig. 6 indicates a melt-processing part for melt-processing the powder waste such as incineration ashes by intense plasma heat. The melt-processing part 5 comprises a waste hopper 2 for receiving the powder waste, discharge electrodes $T_1 \sim T_6$ for generating intense plasma heat, an extruder 3 for feeding the powder waste among the discharge electodes $T_1 \sim T_6$ from the waste hopper 2, and an ejector 4 for ejecting the malt-processed substance. The six-phase AC generator for applying the six-phase AC to the discharge electrodes $T_1 \sim T_6$ is not shown.

In the waste processing apparatus of the present embodiment, since the extruder 3 consisting of a screw conveyer is installed right above the discharge electrodes $T_1 \sim T_6$, the powder waste fed from the extruder 3 through the screw conveyer free-falls and reaches a virtual plane discharge area in which the virtual plane dischage is generated among the discharge electrodes $T_1 \sim T_6$. The waste reaching the discharge area is exposed to intense plasma heat and melted to form spheres. Since the melted waste continues to fall further, the waste cools as it falls further away from the discharge area and becomes a vitrified substance with diameters of about 1/100 mm to several millimeter and is accumulated on the ejector 4 provided in the bottom of the melt-processing part 5.

Then, using a belt conveyer of the ejector 4, the accumulated processed waste beads is carried to the beads ejection outlet 42. Further, in order to collect waste heat efficiently through a heat exchanger 61 (described later), an insulating material 51 is provided on the inner wall of the melt-processing part 5 in which the melted waste cools as it falls.

Mark 6 in the FIG. 6 indicates the exhaust air processing part in which the exhaust air from the said melt-processing part 5 is processed. This exhaust air processing part 6 comprises heat exchanger 61 which absorbs the waste heat generated at the time of melt-processing, blower 62 that creates air flow in the entire apparatus, bag-filter 63 that filters dusts in the exhaust, and ozone collector 64 which collects ozone in the exhaust. Bag-filter 63 is provided with dust outlet 63a which collects and lets out the filtered dust. Ozone collector 64 collects the ozone generated by the ultraviolet light radiated with the intense heat by the arc discharge among discharge electrodes $T_1 \sim T_6$.

In the ozone collector, the sprinkler 64b, ozone decomposition layer 64d, ozone absorption layer 64e, and ozone water outlet 64a are provided from the top to bottom in that order. After ozone is removed, the exhaust air is exhausted from the exhaust outlet 64c provided in the upper part of ozone collector 64.

With the powder waste processing apparatus utilizing the six phase AC six electrode discharge apparatus of the present embodiment, since the supply of the powder waste among discharge electrode $T_1 \sim T_6$ can be done continuously taking advantage of freefall of the waste, efficient continuous processing of the powder waste becomes possible. This supply method is possible because the arc discharge is done in a virtual plane covering a certain area. Also, because the melted waste is cooled as it freefalls without contacting the inner wall of the melt-processing part 5, the problem of shortening the durability of the melt-processing part 5 does not exist. Furthermore, due to the synergistic effect of the extremely high temperature from the discharge electrodes $T_1 \sim T_6$, the accompanying intense ultraviolet radiation, and ozone generated by the radiation, harmful by-products such as dioxin generated at the time of melt-processing powder waste are instantly decomposed. Thus, the exhaust gas problem can be solved at the same time by the present processing apparatus.

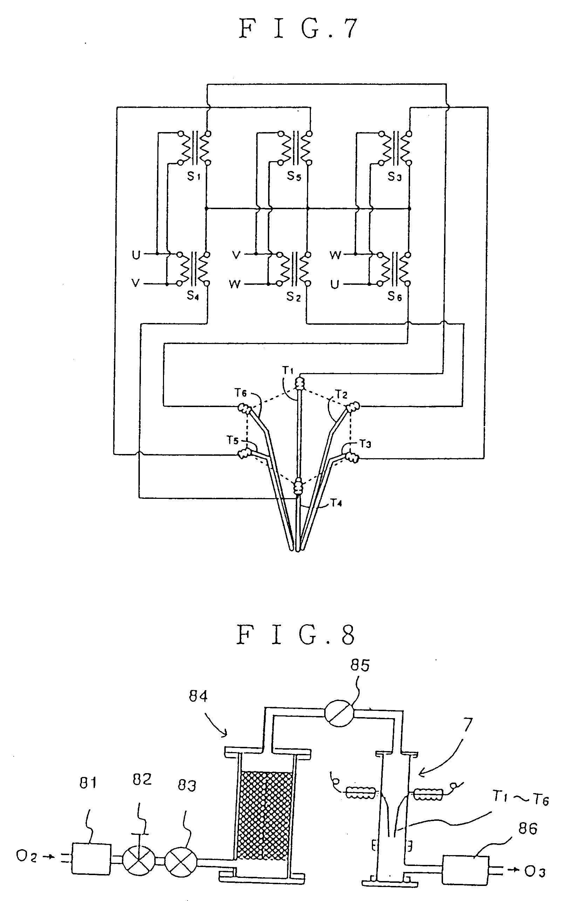

Referring next to Figs.7 and 8, there is shown an ozone generator using the six-phase AC six-electrode discharge apparatus.

In order to generate ozone in large quantity using corona discharge, discharge electrons generated by the corona discharge must be efficiently collided with oxygen molecules. Since the ozone generator of the present embodiment adopts a structure in which the oxygen molecules are passed through a uniform and stable virtual plane corona discharge area generated by the six-phase AC six-electrode discharge apparatus, the discharge electrons can be efficiently collided with the oxygen molecules and ozone can be generated very efficiently.

As shown in Fig. 7, the discharge electrodes $T_1 \sim T_6$ in the ozone generator consists of stainless rods with the diameter of 2 mm having a banded part on the upper side, and the discharge electrodes $T_1 \sim T_6$, whose tips are placed at the near proximity of each vertex of a regular hexagon, are held with electrode holders (not shown) through insulators.

Mark 7 in Fig. 8 indicates an ozone generating chamber with the inner diameter of 90 mm having a cylindrical shape through which oxygen or a gas including oxygen (hereinafter called "material gas") passes. The discharge electrodes $T_1 \sim T_n$ are installed inside the ozone generating chamber 7 and a virtual plane corona discharge is generated. The ozone generator comprises the ozone generating chamber 7, a diaphragm drier 81 for dry-treating the material gas, a dry tower 84 with a CaO, a regulator 82 for adjusting the pressure or flow rate of material gas fed into the ozone generating chamber 7, a flow control valve 83, and a flow meter 85. Further, an ozone gas generated in the ozone generating chamber 7 is measured with an ozone concentration meter 86 and is made available for various applications. The six-phase AC generator for applying the six-phase AC to the discharge electrodes $T_1 \sim T_6$ is not shown.

The result of the measuring test for the ozone generator using the six-phase AC six-electrode discharge apparatus of the present invention is as follows.

With the distance between adjacent electrodes of 10 mm and the consumption power of 350 W, the corona discharge was generated and air (including oxygen of about 20 %) as a material gas was fed at the rate of 2 l/min. As a result, the ozone of 160 mg/min (ozone concentration of 80 $g/m^3$ ) was generated. In this case, the generating efficiency of ozone reached the value of 0.46 mg/Wmin (27.4 g/KWH), and the value compared well to the generating efficiency of 25 g/KWH obtained in the case where a gas including oxygen of 90 % is employed as the material gas in a conventional ozone generator. This test result clearly indicates that the efficiency of the present ozone generator exceeds that of the conventional ozone generator when ozone is generated by the present ozone generator using gas including oxygen of 90 % as the material gas.

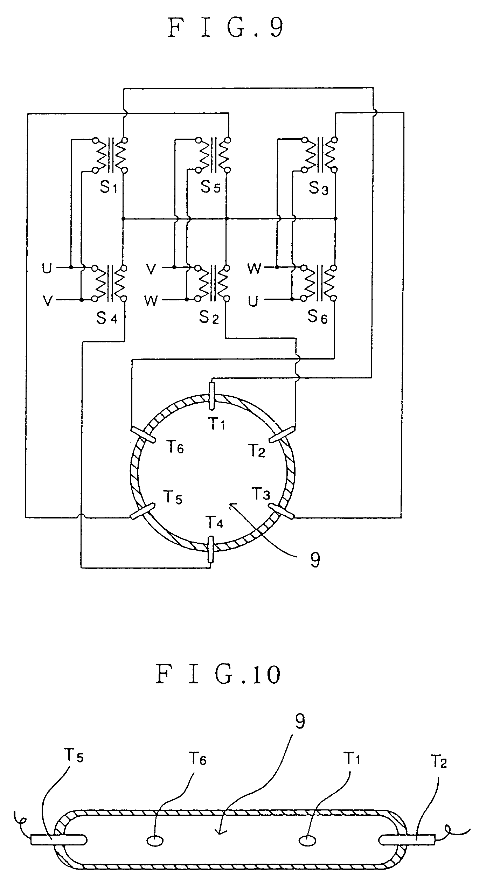

Referring next to Figs. 9 to 11, there is shown the light source apparatus using the six-phase AC six-electrode discharge apparatus.

In the light source apparatus using the electric discharge (discharge lamp), visible light or ultraviolet radiation is obtained from excited atoms by discharging in gas or vapor. Generally, since the discharge lamp can generate electromagnetic wave of a desired wave length more efficiently than the other light source, the discharge lamp is widely used in the field of illumination apparatus or in the field requiring the intensive ultraviolet energy. However, since a linear discharge is used in all the conventional light source apparatus, there is a limit in the enhancement of discharge density. Also, the linear discharge has been only employed as a point or linear light source.

In the light source apparatus of the present embodiment, intensely bright visible light or ultraviolet light of a desired wavelength can be uniformly emitted from the whole region surrounded with the electrodes by utilizing a uniform and stable virtual plane discharge generated by the six-phase AC six-electrode discharge apparatus.

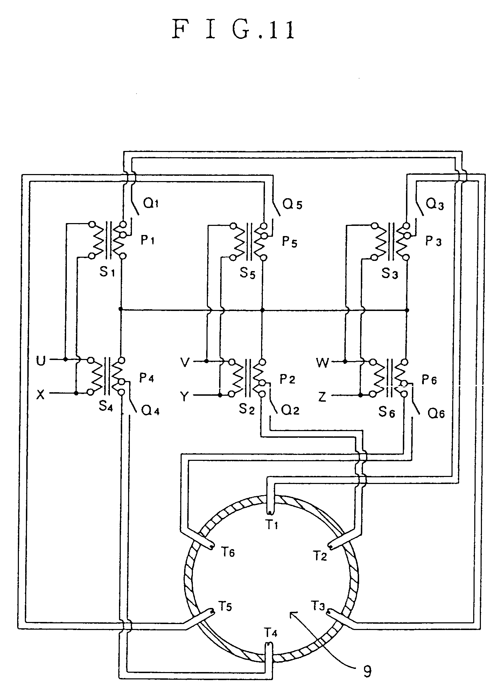

Mark 9 in Figs. 9 and 10 indicates a discharge chamber in which an argon gas with the pressure of several Torr is sealed. The discharge chamber 9 is made of quartz glass with the thickness of 5 to 6 mm formed in the hollow disk shape with the diameter of 700 mm and the height of 40 mm. The discharge electrodes $T_1 \sim T_n$ whose tips are placed in the proximity of each vertex of regular hexagon are mounted on the inner wall of the discharge chamber 9 at regular intervals, and then the virtual plane discharge is performed. Although quartz glass is employed at the discharge chamber 9, a normal glass may be used as the discharge chamber 9 if the normal glass has a sufficient strength. In this embodyment, quartz glass is used because the quartz glass has a good transmittance from visible light to ultraviolet light, a good heat resistance and a high strength.

The light source apparatus of the present invention was operated in the conditions of the discharge voltage of about 1 KV and the discharge current of about 20 mA. As the result, a glow discharge was generated, and a red purple light peculiar to argon gas was uniformly emitted from the whole discharge chamber 9. The gas sealed into the discharge chamber 9 is not limited to the argon. Deuterium, inert gases such as helium, neon, krypton or xenon, vapors from sodium, mercury, metal halide etc. may be used as the sealed gas. The light having the wavelength necessary for each application can be vary efficiently obtained by selecting the kind of the sealed gas and adjusting the pressure of the sealed gas.

As with another modification shown in Fig. 11, also, the light source apparatus using the polyphase AC multielectrode discharge apparatus according to the present invention can be structured so that the discharge electrodes can be preheated before the discharge. In addition to the six-phase output terminals, terminals $P_1 \sim P_6$ for preheating electrodes are respectively mounted in each secondary winding of transformers $S_1 \sim S_6$ for outputting the six-phase AC, and the terminals $P_1 \sim P_6$ are connected through switches $Q_1 \sim Q_6$ to the discharge electrodes $T_1 \sim T_6$ whose tips are made of spiral filament. This enables the discharge to be started easily. That is, when applying the six-phase AC to the discharge electrodes $T_1 \sim T_6$, the switches $Q_1 \sim Q_6$ are turned on and some currant flows in each discharge electrode. Thus, each filament is heated through the Joule heat. Thermal electrons are emitted due to the temperature increase of filaments, and the discharge between the electrodes is started easily. Once the discharge is started, the discharge is continued even if the switches $Q_1 \sim Q_6$ are turned off.

In this modified light source apparatus of the present embodiment, deuterium with the pressure of several Torr was sealed into the discharge chamber 9, and the six-phase AC was applied to each electrode, and the switches $Q_1 \sim Q_6$ were turned on for one to two seconds. As the result, a virtual plane arc discharge (discharge voltage of about 120 V and discharge current of about 6 A) was generated in the whole region surrounded with the discharge electrodes $T_1 \sim T_6$, and ultraviolet light with the wavelength of 160 to 300 nm was emitted from the whole discharge chamber 9. Further, when the pressure of the sealed deuterium was decreased, the wavelength of the emitted ultraviolet light became shorter, and when the pressure of the sealed deuterium was increased, the wavelength of the ultraviolet light became longer.

As mentioned above, when the light source apparatus using the polyphase AC multielectrode discharge apparatus according to the present invention is actuated, the virtual plane discharge is continuously generated in the region surrounded with the discharge electrodes within the discharge chamber, and the whole region emits light. Furthermore, in the virtual plane discharge, since multiple discharges facing the same side rotates at a high speed continuously, the present light source apparatus has a remarkably improved luminous efficacy as compared with the conventional apparatus, and the blink caused by the on and off of discharge associated with the alternation of single-phase AC can be eliminated. The illumination effect is greatly improved if, for example, the light source apparatus of the present invention is installed in a large hall as a plane fluorescent lamp in which the whole plane lights uniformly.

INDUSTRIAL APPLICABILITY

Thus, according to the present invention, each of the various electric discharges such as corona discharge, glow discharge, or arc discharge can be continuously generated in the region surrounded with a plurality of electrodes as the discharge rotates rapidly. Thus, intense heat, extremely bright light, and charged body are generated very efficiently, and because these discharge is done in the form of a plane, the utilization of the high energy accompanied by the various discharges becomes very easy. Moreover, since such an effect can be implemented using a simple structure, the practical value of the present invention is very high. For example, it is not only useful for incineration or decomposition of various kinds of wastes, sterilization or purification of waste water, which belong to the field requiring a very high temperature or intensive ultraviolet radiation, but also it is useful for the light source apparatus using a uniform discharge among a plurality of electrodes. Thus, the application of the apparatus of the present invention will extend to a very wide range of fields .

**Claims**

1. A polyphase AC multielectrode discharge apparatus comprising an n-phase AC generator for outputting the n-phase AC, and discharge electrodes $T_1 \sim T_n$ whose tips are placed in the proximity of each vertex of regular n-gon, characterized in that output terminals of each phase of the n-phase AC generator are connected to the discharge electrodes $T_1 \sim T_n$ clockwise or counterclockwise in the order of phase sequence.

2. A powder waste processing apparatus comprising an n-phase AC generator for outputting the n-phase AC, discharge electrodes $T_1 \sim T_n$ whose tips are placed in the proximity of each vertex of regular n -gon, a waste hopper for receiving a powder waste, an extruder for feeding the powder waste among the discharge electrodes $T_1 \sim T_n$ from the waste hopper, and an ejector for ejecting the melt-treated substance, characterized in that output terminals of each phase of the n-phase AC generator are connected to the discharge electrodes $T_1 \sim T_n$ clockwise or counterclockwise in the order of phase sequence.

3. An ozone generator comprising an n-phase AC generator for outputting the n-phase AC, discharge electrodes $T_1 \sim T_n$ whose tips are placed in the proximity of each vertex of regular n-gon, and an ozone generating chamber which surrounds the discharge electrodes $T_1 \sim T_n$ and through which oxygen or a gas including oxygen passes, characterized in that output terminals of each phase of the n-phase AC generator are connected to the discharge electrodes $T_1 \sim T_n$ clockwise or counterclockwise in the order of phase sequence.

4. A light source apparatus comprising an n-phase AC generator for outputting the n-phase AC, discharge electrodes $T_1 \sim T_n$ whose tips are placed in the proximity of each vertex of regular n-gon, and a discharge chamber which envelopes the discharge electrodes $T_1 \sim T_n$ and into which gas or vapor is sealed, characterized in that output terminals of each phase of the n-phase AC generator are connected to the discharge electrodes $T_1 \sim T_n$ clockwise or counterclockwise in the order of phase sequence.

# F I G . 1

# FIG.2

# FIG.3

# F I G . 4

# F I G . 5

# F I G . 6

# F I G . 7

# F I G . 8

# F I G . 9

# F I G .10

# F I G.11

| | International application No. |
|---|---|
| | PCT/JP93/01166 |

**A. CLASSIFICATION OF SUBJECT MATTER**

Int. Cl$^5$  H01T23/00, F23G5/00, H05B31/50,
F23J1/00, B09B3/00, C01B13/11

According to International Patent Classification (IPC) or to both national classification and IPC

**B. FIELDS SEARCHED**

Minimum documentation searched (classification system followed by classification symbols)

Int. Cl$^5$  H01T23/00, F23G5/00, H05B31/50,
F23J1/00, B09B3/00, C01B13/11

Documentation searched other than minimum documentation to the extent that such documents are included in the fields searched

| Jitsuyo Shinan Koho | 1975 - 1993 |
|---|---|
| Kokai Jitsuyo Shinan Koho | 1975 - 1993 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP, A, 4-100583 (Manyo Kogyo K.K.), April 2, 1992 (02. 04. 92), (Family: none) | 1-4 |
| Y | JP, Y2, 2-75193 (Mitsubishi Heavy Industries, Ltd.), June 8, 1990 (08. 06. 90) | 1-4 |
| Y | JP, A, 63-53882 (Canon Inc.), March 8, 1988 (08. 03. 88), (Family: none) Line 3, lower left column to line 7, lower right column, page 2 | 1-4 |
| Y | JP, A, 63-143789 (Honda Motor Co., Ltd.), June 16, 1988 (16. 06. 88), (Family: none) | 4 |
| Y | JP, Y2, 49-25375 (Yamato Sangyo K.K.), March 4, 1974 (04. 03. 74) | 3 |
| Y | JP, A, 50-26790 (Mitsubishi Electric Corp.), March 19, 1975 (19. 03. 75) | 3 |

[X] Further documents are listed in the continuation of Box C.      [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| November 5, 1993 (05. 11. 93) | November 22, 1993 (22. 11. 93) |

| Name and mailing address of the ISA/ | Authorized officer |
|---|---|
| Japanese Patent Office | |
| Facsimile No. | Telephone No. |

Form PCT/ISA/210 (second sheet) (July 1992)